# EUROPEAN PATENT APPLICATION

(11) **EP 1 009 159 A2**
(43) Date of publication of application: **14.06.2000**
(21) Application number: 99309631.2
(22) Date of filing: 01.12.1999
(51) Int. Cl.: H04N 1/40, H04N 1/48

(54) **Multiple photo sensor row scanning apparatus**

(30) Priority: 07.12.1998 US 206456
(71) Applicant: Hewlett-Packard Company, Palo Alto, California 94304 (US)
(72) Inventor: Steinle, Michael J., Fort Collins, CO 80525 (US); Bybee, Jerry L., Loveland, CO 80537 (US)
(74) Representative: Colgan, Stephen James

(57) **Abstract**

A scanner sums the signal for each color across multiple rows of a photo sensor giving improved signal-to-noise ratio of its electronic image. Using multiple sensor rows enables increased light accumulation without affecting resolution or scanning speed

## Description

### FIELD OF THE INVENTION

This invention relates generally to scanners, copiers, facsimile machines and other devices used for transforming an optical image of a document into a electronic signal and more specifically to increasing the signal-to-noise ratio of the image by averaging the output of multiple lines of photo sensor elements.

### BACKGROUND OF THE INVENTION

Scanners are devices that transform an optical image of a document into electronic form. Scanners typically have lenses and mirrors that focus an image of the page to be transformed onto a photo sensor array, a lamp to illuminate the page to be transformed, and a photo sensor array that coverts the image into an electronic signal. The photo sensor array is typically a charged-coupled device (CCD). The area of the page focused onto the CCD is usually referred to as the "scan line". The direction along the scan line is typically called the scan width or X-direction. The entire object is scanned by sweeping the illuminated scan line across the entire object, either by moving the object with respect to the illumination and optical assemblies, or by moving the illumination and optical assemblies relative to the object. The direction of relative movement is typically called the scan length or Y-direction.

One type of CCD used in color scanners has three rows or lines of photo sensor elements. Each line or row is covered with a filter that allows the transmission of a band of visible light, typically a red, green, and blue band. A distance separates the rows of photo sensor elements, typically 8 to 16 times the width of a photo sensor element. As the scan proceeds, each area on the page to be scanned is successively imaged onto each of the three photo sensor rows. The scanner typically has a buffer that stores a sufficient number of lines such that the red, green, and blue image components of the area on the page can be recombined to form a full color image of each area on the page that was scanned. This full color image can then be used for further image processing before being sent to the host computer.

The signal-to-noise ratio of the electronic signal is one of the factors that determines the image quality of the scan. Some of the components that have an impact on the signal-to-noise ratio are: the amount of light accumulated over time at the CCD, the noise in the CCD, the noise in the analog to digital converter (A/D converter), and the exposure time for the CCD. To maximize the signal-to-noise ratio, the CCD should accumulate enough light during the exposure time to almost reach saturation. At the same time the noise in the A/D converter and other analog circuitry should be minimized. Some of the noise in the analog circuitry is time dependent. The longer the exposure time the more noise that accumulates. One way to reduce this noise is to decrease the exposure time. One way to decrease the exposure time while still accumulating enough light to almost reach saturation, is to increase the illumination of the page to be scanned by increasing the brightness of the light. Another way is to increase the amount of light the lens collects. Both methods add cost to the scanner.

Some scanners increase the signal-to-noise ratio of the electronic image, at the expense of resolution and scanning time, by averaging adjacent photo sensor elements together. Averaging reduces noise by 1/(square root N) where N is the number of signals averaged together. This averaging can be done in either the x or y directions. When the averaging is done in the y direction each photo sensor element in the two scan lines are averaged together. The scanner must scan at twice the requested scan resolution in order to average two scan lines together and generate the same output resolution. Typically, scanning at twice the resolution doubles the time for a scan. The averaging in the x direction is done by averaging two photo sensor elements together. Averaging two photo sensor elements together when the requested resolution is the native or optical resolution reduces the effective resolution of the scanner.

The native or optical resolution of a scanner in the x direction is typically the size or area of the page that is imaged onto the photo sensor element. For an 5.3-micron wide photo sensor with an 8 to 1 magnification ratio in the optical path, the width on the page is 1/600 inch (.0423mm), giving the scanner a native resolution of 600 samples per inch (spi) (23.622 samples per mm). When a 600-spi scanner averages two photo sensor elements together, in the x direction, the area scanned by the two photo sensor elements is 2/600 inch or 1/300 inch (.0847 mm). This increase in the area covered by the effective size of a photo sensor element increases the size of the smallest feature that the scanner can detect.

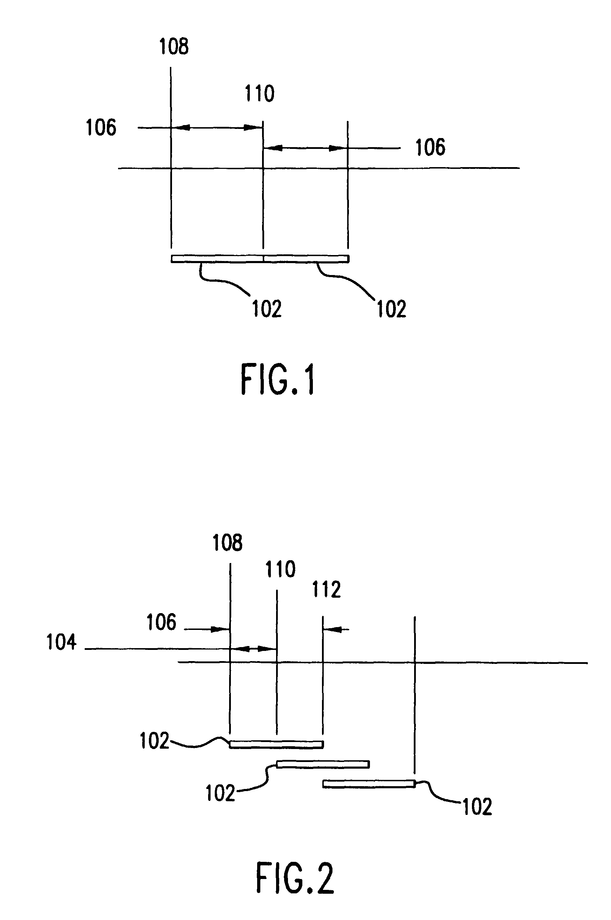

The optical or native resolution of a scanner in the y direction is a function of the area of the page that is imaged onto the photo sensor element, the sweep rate of the photo sensor element with respect to the page, and the exposure time of the photo sensor. For example, a scanner that has an image of the photo sensor on the page of 1/600 inch, a sweep rate of 1/600 inch in 5 milliseconds, and an exposure time of 5 milliseconds, would have a native scan resolution in the y direction of 600 samples per inch. Figure 1 shows the position of a photo sensor element, in the y direction, at different times as it sweeps along a scan. Photo sensor element 102 is shown at time 108 and time 110. The difference between time 110 and time 108 is delta time. The size of photo sensor element 102 is distance 106. When the photo sensor element moves at a rate equal to distance 106 in delta time the scanner will be scanning at the native or optical resolution in the y direction.

Figure 2 shows the same photo sensor element 102 traveling at half the speed or twice the resolution as shown in figure 1. The vertical position of photo sensor element 102 has been offset for clarity. The size of photo sensor element 102 is distance 106. Photo sensor element 102 is shown at time 108, 110, and 112. The difference between time 110 and time 108 is the same delta time as shown in figure 1. The difference between time 112 and time 110 is also delta time. Because the photo sensor element is moving at half the speed it covers half the distance (length 104) in the time between time 108 and time 110. This shows that it will take twice as long to scan the same area when scanning at twice the resolution.

Some scanners sacrifice the signal-to-noise ratio of the electronic image for a faster scan. When the exposure time of the CCD is insufficient to accumulate enough light on the CCD to almost reach saturation, the signal-to-noise ratio decreases with a corresponding decrease in the image quality. Having a shorter exposure time allows the scanner to scan a given resolution at a faster rate. Some scanners choose between a slow scan with higher image quality vs. a fast scan with lower image quality, dependent on the type of image being scanned. Users would like a low cost scanner that can both scan quickly and retain high image quality.

There is a need for a low cost scanner that can scan at faster speeds without sacrificing image quality.

### SUMMARY OF THE INVENTION

A scanner sums the signal for each color across multiple rows of a photo sensor giving improved signal-to-noise ratio of its electronic image. Using multiple sensor rows enables increased light accumulation without affecting resolution or scanning speed.

### BRIEF DESCRIPTION OF THE DRAWINGS

Figure 1 is a plot of photo sensor position vs. time at speed one.

Figure 2 is a plot of photo sensor position vs. time at speed two.

Figure 3 is a top view of a photo sensor array in accordance with the invention.

Figure 4 is a plot of the position of a multiple row photo sensor vs. time at speed one.

Figure 5 is a block diagram of a summing circuit.

### DETAILED DESCRIPTION OF THE PREFERRED EMBODIMENT

A scanner that has multiple rows of photo sensors that are averaged together to produce an electronic image can scan quickly without sacrificing image quality. For example, a typical color scanner has a photo sensor array (typically a CCD) that has three rows of photo sensor elements. The photo sensor array has one row of photo sensor elements for each color to be captured. For this scanner to output a 300 lines per inch (lpi) scan that is an average of two lines it must scan at 600 lpi and then average 2 lines to get the 300-lpi output. A scanner that has a photo sensor array containing 6 lines of photo sensor elements, two rows of photo sensor elements for each of the three colors to be captured, can output a 300-lpi scan that is an average of two scan lines while scanning at 300 lpi. A 300-lpi scan is typically 2 times faster than a 600-lpi scan. By having two photo sensor rows for each color, all the light from each area on the page is collected twice and then averaged together. It is like having two scanners scanning the same page at the same time and then averaging the results together.

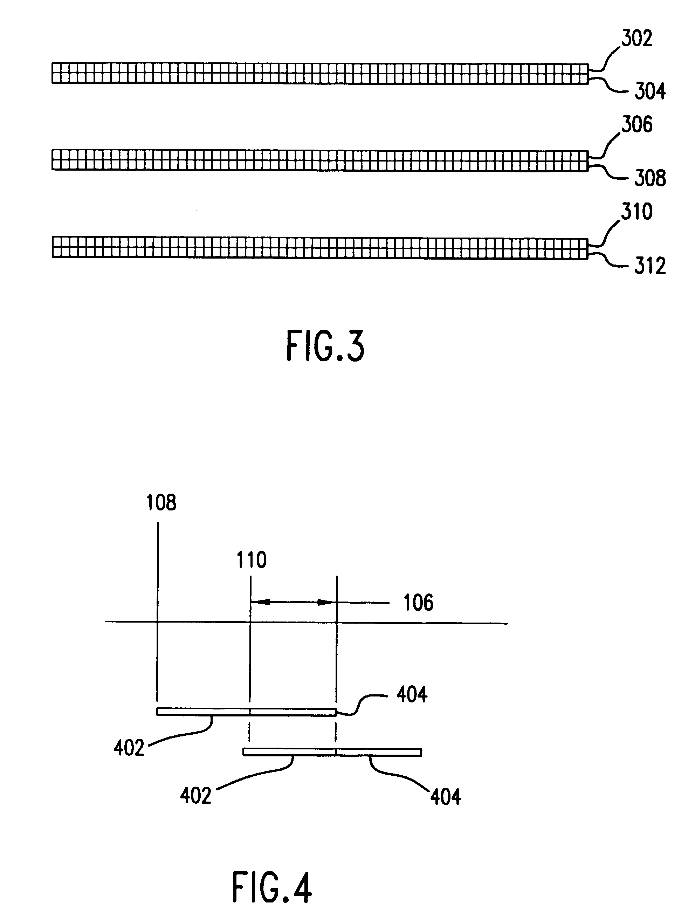

Figure 3 shows a photo sensor array that has 6 rows of photo sensor elements. Typically there are over 5,000 photo sensor elements in each row of a photo sensor array but for clarity a reduced number of photo sensor elements have been shown. Rows 302 and 304 collect light from the red spectra. Rows 306 and 308 collect light from the green spectra. Rows 310 and 312 collect light from the blue spectra. The order of the filters (red, green, and then blue) is not important. Each row of photo sensor elements are numbered from element 1 up to element M, where M is the maximum number of elements in each row. Each pair of photo sensor rows that collect light from a single spectra form a set of photo sensor rows. There is a red set, a green set and a blue set. In the example embodiment each set is composed of two rows of photo sensor elements. However, each set could be composed of more than two rows of photo sensor elements.

Figure 4 shows the position, in the y direction, of a photo sensor array with two rows of photo sensor elements at different times as it sweeps along a scan. Photo sensor elements 402 and 404 are shown at time 108 and time 110. The photo sensor elements 402 and 404 have been offset in the vertical direction at time 110 for clarity. The difference between time 110 and time 108 is delta time. The size of photo sensor elements 402 and 404 are the same and equal to distance 106. At time 108 photo sensor element 404 is collecting light from distance 106. At time 110 photo sensor element 402 is collecting light from the same distance 106 that element 404 collected from at time 108. This shows that the light from each area on the page is collected twice at different times, once for each photo sensor. These two amounts of light are then averaged together to form one signal with an increased signal-to-noise ratio.

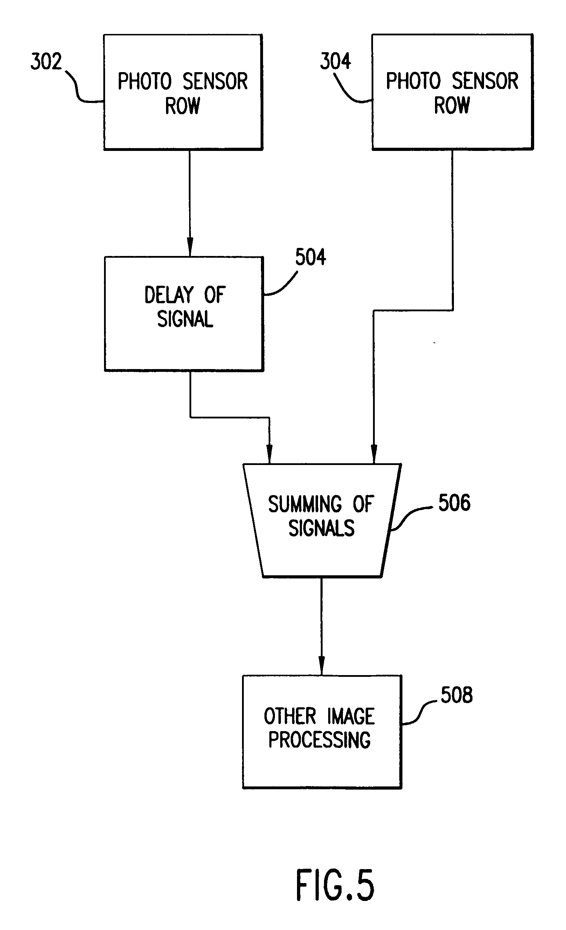

Figure 5 shows a block diagram of the circuit that sums the signals from the photo sensor element rows 302 and 304. Each set of photo sensor rows would have a similar circuit. In figure 5, the output from photo sensor row 302 is delayed or temporally buffered in box 504. A distance equal to the width of a photo sensor element separates rows 302 and 304. As the scan proceeds, each area on the page to be scanned is successively imaged onto each of the two photo sensor rows. The delay corresponds to the amount of time required to offset the difference in position between row 302 and 304 such that the electronic signals summed correspond to the same area on the page being scanned. U.S. Patent 5,336,878 teaches a method and device for combining the signals from offset photo sensor rows and is hereby included by reference. In box 506, the delayed signals from row 302 are summed with the signals from row 304. The signal from each photo sensor element in row 302 is summed with the corresponding signal from the photo sensor element in row 304. For example the signal from photo sensor element 1 from row 302 is summed with the signal from photo sensor element 1 in row 304. The summed signal from the two rows is sent to box 508 for any additional image processing that is desired.

The increase in the signal-to-noise ratio is the square root of N, where N is the number of lines that are summed. For example, when summing two lines the signal-to-noise ratio would be increased by the square root of 2 or approximately 1.4. By increasing the number of rows in the photo sensor array, the signal-to-noise ratio can be improved. Because the exposure time of the photo sensor has not been changed, the increase in the signal-to-noise ratio has not increased the time required for a scan.

Some scanners are designed to scan photographic negatives. Some photographic negatives absorb significantly more blue light than either red or green light. The reduction in the amount of blue light passing through the negative to the photo sensor will increase the amount of time required for the blue photo sensor row to collect enough light to almost reach saturation. If the scanner is exposing all three colors at the same time and the same rate either the blue photo sensors will not have enough light or the red and green sensors will have too much light. When a photo sensor does not collect enough light to all most reach saturation, the signal-to-noise ratio is reduced. One way to fix this problem is to add more rows of photo sensor elements to the photo sensor array that collect blue light. The signals from these additional rows can be averaged together to increase the signal-to-noise ratio of the blue channel without affecting the exposure time for the red or green channels.

Black and white or grayscale scanner typically have only has one row of photo sensor elements that collect the light from all the red, green, and blue spectrums. Adding additional rows of such photo sensor elements to a grayscale scanner will allow either faster scans with the same signal-to-noise ratios or scans at the same speed with higher signal-to-noise ratios.

## Claims

1. A scanner comprising:
at least 2 rows of photo sensor elements that detect the same spectra(302, 304);
a circuit that sums the signals (506) from each corresponding sensor element within each row of photo sensor elements, whereby the summed signal from each set of photo sensor elements has an increased signal-to-noise ratio.

2. A scanner comprising:
at least 2 rows of photo sensor elements that detect a first spectra(302, 304);
at least 2 rows of photo sensor elements that detect a second spectra(306, 308);
at least 2 rows of photo sensor elements that detect a third spectra(310, 312);
a circuit that sums the signals (506) from each corresponding sensor element within each row of photo sensor elements that detect the first spectra;
a circuit that sums the signals (506) from each corresponding sensor element within each row of photo sensor elements that detect the second spectra;
and a circuit that sums the signals (506) from each corresponding sensor element within each row of photo sensor elements that detect the third spectra, whereby the summed signal from each set of photo sensor elements has an increased signal-to-noise ratio.

3. An array of photo sensor elements as in claim 2 where:
the first spectra is a red spectra;
the second spectra is a green spectra;
and the third spectra is a blue spectra.

4. A scanner comprising:
at least 2 rows of photo sensor elements that detect a first spectra (302, 304);
at least 1 rows of photo sensor elements that detect a second spectra;
at least 1 rows of photo sensor elements that detect a third spectra;
a circuit that sums the signals (506) from each corresponding sensor element within each row of photo sensor elements that detect the first spectra;
a circuit that sums the signals from each corresponding sensor element within each row of photo sensor elements that detect the second spectra;
and a circuit that sums the signals from each corresponding sensor element within each row of photo sensor elements that detect the third spectra, whereby the summed signal from each set of photo sensor elements has an increased signal-to-noise ratio.

5. An array of photo sensor elements as in claim 4 where:
the first spectra is a red spectra;
the second spectra is a green spectra;
and the third spectra is a blue spectra.

6. An array of photo sensor elements as in claim 4 where:
the first spectra is a blue spectra;
the second spectra is a green spectra;
and the third spectra is a red spectra.

7. An array of photo sensor elements as in claim 4 where:
the first spectra is a green spectra;
the second spectra is a red spectra;
and the third spectra is a blue spectra.
